(19) Europäisches Patentamt
European Patent Office
Office européen des brevets

(11) EP 4 556 497 A1

(12) **EUROPEAN PATENT APPLICATION**
published in accordance with Art. 153(4) EPC

(43) Date of publication:
**21.05.2025 Bulletin 2025/21**

(21) Application number: **23839572.7**

(22) Date of filing: **06.07.2023**

(51) International Patent Classification (IPC):
***C08F 14/22*** *(2006.01)* ***C08F 2/06*** *(2006.01)*

(52) Cooperative Patent Classification (CPC):
**C08F 2/06; C08F 14/22**

(86) International application number:
**PCT/JP2023/025196**

(87) International publication number:
**WO 2024/014400 (18.01.2024 Gazette 2024/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **13.07.2022 JP 2022112715**

(71) Applicant: **AGC INC.**
**Chiyoda-ku,**
**Tokyo 1008405 (JP)**

(72) Inventors:
- **ORITO, Yuki**
  **Tokyo 100-8405 (JP)**
- **WATANUKI, Shun**
  **Tokyo 100-8405 (JP)**

(74) Representative: **Müller-Boré & Partner Patentanwälte PartG mbB**
**Friedenheimer Brücke 21**
**80639 München (DE)**

(54) **METHOD FOR PRODUCING FLUORINE-CONTAINING COPOLYMER**

(57) A method for producing a fluorine-containing polymer, the method including performing polymerization using a monomer containing vinylidene fluoride in a polymerization medium containing at least one polymerization solvent A selected from the group consisting of compounds represented by the following Formula (1) and Formula (2). The description of Formulas (1) to (2) is omitted.

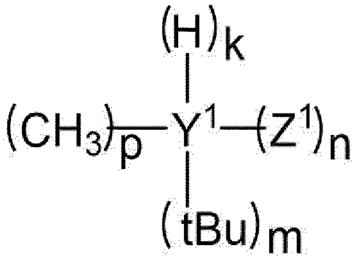

(1)

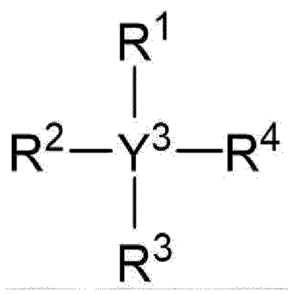

(2)

EP 4 556 497 A1

**Description**

Technical Field

The present disclosure relates to a method for producing a fluorine-containing copolymer.

Background Art

In recent years, fluorine-based polymers are polymer materials excellent in heat resistance, solvent resistance, chemical resistance, and the like, and because of such advantageous characteristics, the fluorine-based polymers have been utilized in a variety of uses.
As a method for producing a fluorine-based polymer, polymerization methods such as a solution polymerization method, a suspension polymerization method, and an emulsion polymerization method are known.
For example, Patent Literature 1 and Patent Literature 2 describe a polymerization reaction using vinylidene fluoride.

Citation List

Patent Literature

Patent Literature 1: United State Patent Application Laid-Open (US-A) No. 2015/0057419
Patent Literature 2: WO 2015/047749 A1

SUMMARY OF INVENTION

Technical Problem

However, in the methods described in Patent Literature 1 and Patent Literature 2, the polymerization rate is slow, and a method of more efficiently obtaining a fluorine-containing copolymer is desired.
An object of an embodiment of the present invention is to provide a method for producing a fluorine-containing copolymer in which a polymerization rate is higher than before. Solution to Problem
The disclosure includes the following aspects.

<1>
A method for producing a fluorine-containing polymer, the method including performing polymerization using a monomer containing vinylidene fluoride in a polymerization medium containing at least one polymerization solvent A selected from the group consisting of compounds represented by the following Formula (1) and Formula (2):

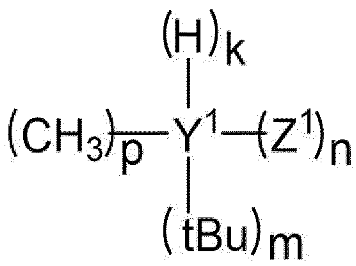

(1)

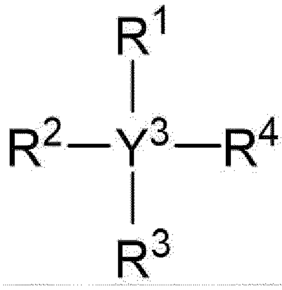 (2)

in Formula (1), $Y^1$ represents an oxygen atom,
each of p, m, n, and k is independently an integer satisfying p + m = 1 or more and p + m + n + k = 2,
when p is 1 or more, n is 1 or more,
each $Z^1$ is independently a group represented by any one of the following Formulas (T1) to (T14),
in Formula (2), $Y^3$ represents a carbon atom or a silicon atom, and
each of $R^1$ to $R^4$ independently represents a methyl group, a tert-butyl group, or a tert-butoxy group, and

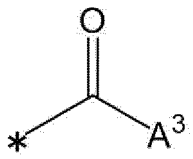
(T1)

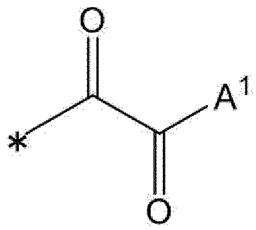
(T2)

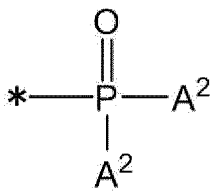
(T3)

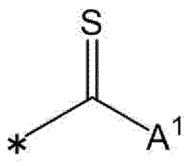
(T4)

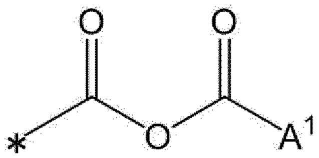
(T5)

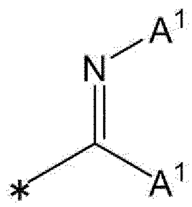
(T6)

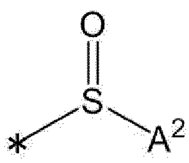
(T7)

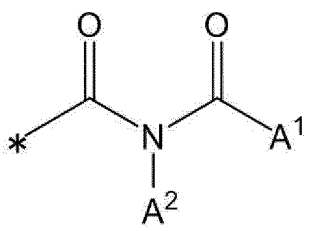
(T8)

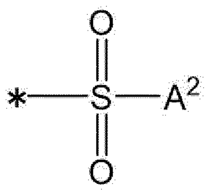
(T9)

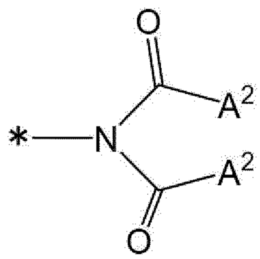
(T10)

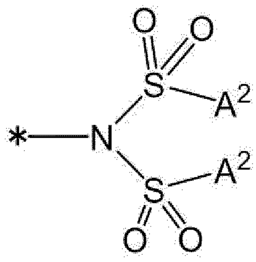
(T11)

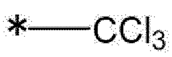
(T12)

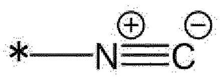
(T13)

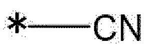
(T14)

in Formulas (T1) to (T14), each $A^1$ independently represents a hydrogen atom, a chlorine atom, a methyl group, a tert-butyl group, -OR, $-NR_2$, or -SR, each $A^2$ independently represents a chlorine atom, a methyl group, a tert-butyl group, -OR, $-NR_2$, or -SR, $A^3$ represents a hydrogen atom, a chlorine atom, a tert-butyl group, a tert-butoxy group, $-NR_2$, or -SR, each R independently represents a methyl group or a tert-butyl group, and * represents a binding site.

<2>

The method for producing a fluorine-containing polymer according to <1>, wherein the monomer further includes a fluorine-containing monomer having a fluorine atom other than the vinylidene fluoride, and

the fluorine-containing monomer includes at least one selected from the group consisting of fluorine-containing monomers represented by the following Formulas (X1), (X2), and (X3):

$$CX^1X^2{=}C(X^3)\text{-}(O)_{n1}\text{-}Rf^1R^{10} \ldots \qquad (X1)$$

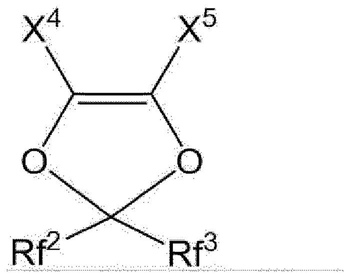

(X2)

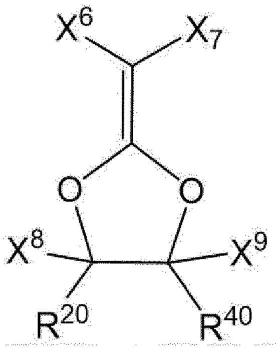

(X3)

in Formula (X1), each of $X^1$, $X^2$, and $X^3$ independently represents a hydrogen atom or a fluorine atom,
$Rf^1$ represents a perfluoroalkylene group having from 1 to 5 carbon atoms, and an etheric oxygen atom may be contained between carbon-carbon bonds of the perfluoroalkylene group,
$R^{10}$ represents a hydrogen atom, a fluorine atom, $-SO_2R^{11}$, $-COR^{11}$, or a cyano group,
each $R^{11}$ independently represents a hydrogen atom, a fluorine atom, a hydroxyl group, or an alkoxy group, and n1 is 0 or 1,
in Formula (X2), each of $X^4$ and $X^5$ independently represents a hydrogen atom or a fluorine atom,
each of $Rf^2$ and $Rf^3$ independently represents a perfluoroalkyl group having 1 to 5 from carbon atoms or a fluorine atom, and an etheric oxygen atom may be contained between carbon-carbon bonds of the perfluoroalkyl group, and
in Formula (X3), each of $X^6$, $X^8$, and $X^9$ independently represents a hydrogen atom or a fluorine atom,
each $X^7$ independently represents a hydrogen atom, a fluorine atom, or a trifluoromethyl group,
each $R^{20}$ independently represents a fluorine atom or $-Rf^4-R^{30}$,
each $R^{40}$ independently represents a fluorine atom or $-Rf^5-R^{50}$,
each of $Rf^4$ and $Rf^5$ independently represents a perfluoroalkylene group having 1 to 5 from carbon atoms, and an etheric oxygen atom may be contained between carbon-carbon bonds of the perfluoroalkylene group, and
each of $R^{30}$ and $R^{50}$ independently represents $-SO_2R^{11}$, $-COR^{11}$, or a cyano group.

<3>
The method for producing a fluorine-containing polymer according to <1> or <2>, wherein the monomer further includes at least one fluorine-containing monomer selected from the group consisting of hexafluoropropylene and tetrafluoroethylene.
<4>
The method for producing a fluorine-containing copolymer according to any one of <1> to <3>, wherein the monomer further includes a non-fluorinated monomer having no fluorine atom and having an ethylenically unsaturated group.
<5>
The method for producing a fluorine-containing copolymer according to any one of <1> to <4>, wherein the monomer further includes a non-fluorinated monomer having no fluorine atom, having an ethylenically unsaturated group, and having at least one reactive group selected from the group consisting of a reactive silyl group, an amino group, an isocyanato group, a hydroxyl group, an epoxy group, an acid anhydride residue, an alkoxycarbonyl group, a carboxy group, and a carboxylic acyl group.
<6>
The method for producing a fluorine-containing copolymer according to any one of <1> to <5>, wherein the monomer further includes a non-fluorinated monomer having no fluorine atom, having an ethylenically unsaturated group, and having at least one reactive group selected from the group consisting of a hydroxyl group, an acid anhydride residue, an alkoxylcarbonyl group, a carboxy group, and a carboxylic acyl group.
<7>
The method for producing a fluorine-containing copolymer according to any one of <1> to <6>, wherein a proportion of water in the polymerization medium is less than 10 vol%, and
solution polymerization is performed using the monomer in the polymerization medium.
<8>
The method for producing a fluorine-containing polymer according to any one of <1> to <7>, wherein suspension polymerization is performed using the monomer in a polymerization medium containing the at least one polymerization solvent A selected from the group consisting of compounds represented by Formula (1) and Formula (2) and incompatible with water, and water,

a proportion of water in the polymerization medium is from 10 vol% to 80 vol%,
in Formula (1), $Y^1$ represents an oxygen atom,
k is 0, each of p, m, n, and k is independently an integer satisfying p + m = 1 or more and p + m + n = 2,
when p is 1 or more, n is 1 or more,
each $Z^1$ is independently a group represented by any one of Formulas (T1) to (T3), Formula (T7), Formula (T8), or Formula (T10),
in Formula (2), $Y^3$ represents a carbon atom or a silicon atom,
each of $R^1$ to $R^4$ independently represents a methyl group, a tert-butyl group, or a tert-butoxy group, and
in Formulas (T1) to (T3), (T7), (T8), and (T10), each $A^1$ independently represents a hydrogen atom, a methyl group, a tert-butyl group, -OR, or $-NR_2$, each $A^2$ independently represents a methyl group, a tert-butyl group, -OR, or $-NR_2$, $A^3$ represents a hydrogen atom, a tert-butyl group, a tert-butoxy group, or $-NR_2$, each R independently represents a methyl group or a tert-butyl group, and * represents a binding site.

<9>
The method for producing a fluorine-containing copolymer according to any one of <1> to <8>, wherein in Formula (1), each $Z^1$ is independently a group represented by any one of Formulas (T1) to (T3).
<10>
The method for producing a fluorine-containing copolymer according to any one of <1> to <9>, wherein in Formula (1), each $Z^1$ is independently a group represented by Formula (T1).
<11>
The method for producing a fluorine-containing copolymer according to any one of <1> to <10>, wherein in Formula (2), $Y^3$ represents a carbon atom.

Advantageous Effects of Invention

According to the disclosure, there is provided a method for producing a fluorine-containing copolymer in which a polymerization rate is higher than before.

DESCRIPTION OF EMBODIMENTS

In the disclosure, a numerical range that has been indicated by use of "to" indicates the range that includes the numerical values which are described before and after "to", as a minimum value and a maximum value, respectively.
In a numerical range described in a stepwise manner in the disclosure, an upper limit value
or a lower limit value described in one numerical range may be replaced with an upper limit value or a lower limit value described in another numerical range described in a stepwise manner. In a numerical range described in the disclosure, an upper limit value or a lower limit value described in one numerical range may be replaced with a value shown in Examples.
In the disclosure, a combination of two or more preferred aspects is a more preferred aspect.
In a case in which a plurality of substances corresponding to each component are present, the content of each component in the disclosure means the total content of the plurality of substances unless otherwise specified.
In the disclosure, "tBu" means a "tert-butyl group".

[Method for Producing Fluorine-Containing Copolymer]

A method for producing a fluorine-containing copolymer of the disclosure is a method in which polymerization is performed using a monomer containing vinylidene fluoride in a polymerization medium containing at least one polymerization solvent A selected from the group consisting of compounds represented by the following Formula (1) and Formula (2).

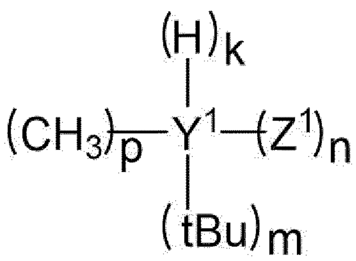

(1)

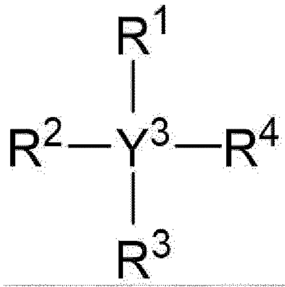

(2)

In Formula (1), $Y^1$ represents an oxygen atom,

each of p, m, n, and k is independently an integer satisfying p + m = 1 or more and p + m + n + k = 2,
when p is 1 or more, n is 1 or more,
each $Z^1$ is independently a group represented by any one of the following Formulas (T1) to (T14),
in Formula (2), $Y^3$ represents a carbon atom or a silicon atom, and
each of $R^1$ to $R^4$ independently represents a methyl group, a tert-butyl group, or a tert-butoxy group.

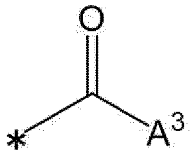

(T1)

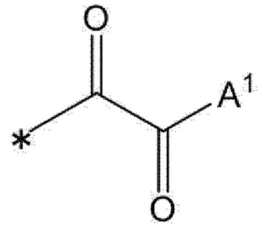

(T2)

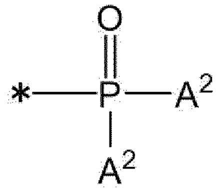

(T3)

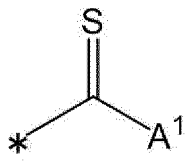

(T4)

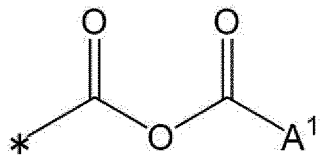

(T5)

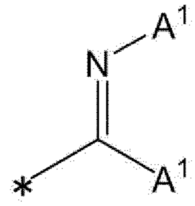

(T6)

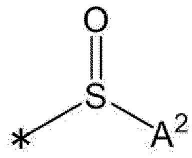

(T7)

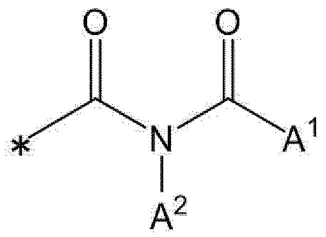

(T8)

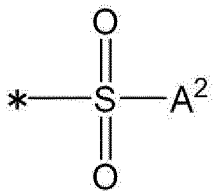

(T9)

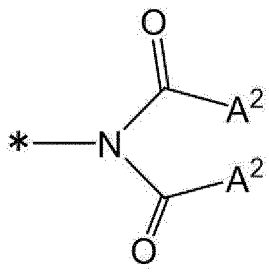

(T10)

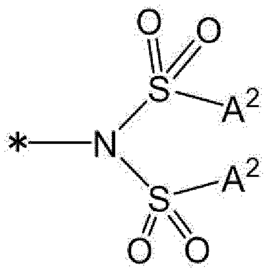

(T11)

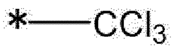

(T12)

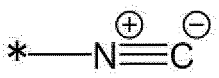

(T13)

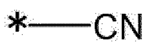

(T14)

In Formulas (T1) to (T14), each $A^1$ independently represents a hydrogen atom, a chlorine atom, a methyl group, a tert-butyl group, -OR, $-NR_2$, or -SR, each $A^2$ independently represents a chlorine atom, a methyl group, a tert-butyl group, -OR, $-NR_2$, or -SR, $A^3$ represents a hydrogen atom, a chlorine atom, a tert-butyl group, a tert-butoxy group, $-NR_2$, or -SR, each R independently represents a methyl group or a tert-butyl group, and * represents a binding site.

In a case in which there are a plurality of $A^1$ in one group, the plurality of $A^1$ may be the same as or different from each other. In a case in which there are a plurality of $A^2$ in one group, the plurality of $A^2$ may be the same as or different from each other.

In the case of using the method for producing a fluorine-containing copolymer of the disclosure, polymerization proceeds at a higher polymerization rate than before, and a fluorine-containing copolymer can be obtained. The present inventors presume the reason why such an effect can be exhibited as follows.

In the method for producing a fluorine-containing copolymer of the disclosure, polymerization is performed in a polymerization medium containing at least one polymerization solvent A selected from the group consisting of compounds represented by Formula (1) and Formula (2). Each of the polymerization solvents A has low chain mobility. Therefore, it is presumed that the polymerization of the monomer containing vinylidene fluoride proceeds smoothly.

Hereinafter, the method for producing a fluorine-containing copolymer of the disclosure will be described in detail.

(Polymerization Medium)

The polymerization medium contains at least one polymerization solvent A selected from the group consisting of compounds represented by Formula (1) and Formula (2).

<Compound Represented by Formula (1)>

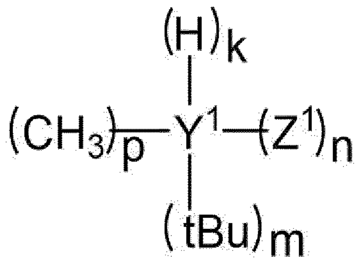

(1)

In Formula (1), $Y^1$ represents an oxygen atom.

Each of p, m, n, and k is independently an integer satisfying p + m = 1 or more and p + m + n + k = 2.

When p is 1 or more, n is 1 or more.

Each $Z^1$ is independently a group represented by any one of the following Formulas (T1) to (T14).

In Formulas (T1) to (T14), each $A^1$ independently represents a hydrogen atom, a chlorine atom, a methyl group, a tert-butyl group, -OR, $-NR_2$, or -SR, each $A^2$ independently represents a chlorine atom, a methyl group, a tert-butyl group, -OR, $-NR_2$, or -SR, $A^3$ represents a hydrogen atom, a chlorine atom, a tert-butyl group, a tert-butoxy group, $-NR_2$, or -SR, each R independently represents a methyl group or a tert-butyl group, and * represents a binding site.

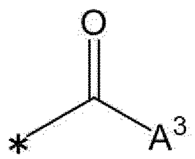

(T1)

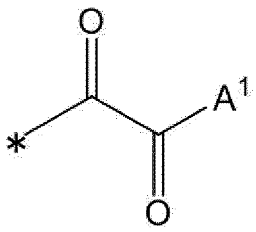

(T2)

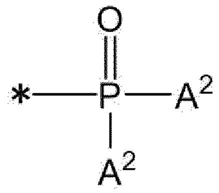

(T3)

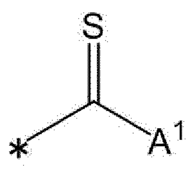

(T4)

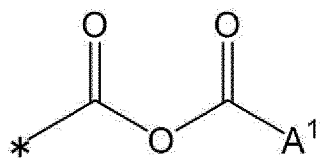

(T5)

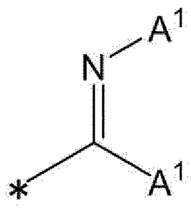

(T6)

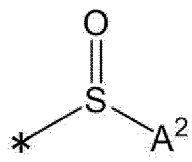

(T7)

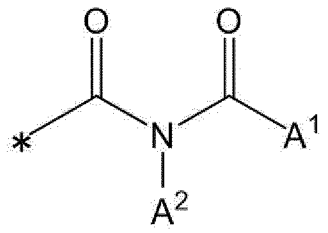
(T8)

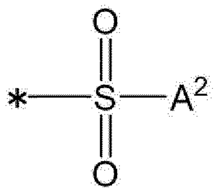
(T9)

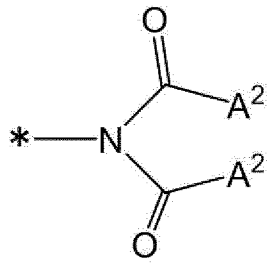
(T10)

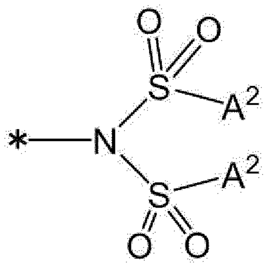
(T11)

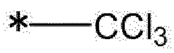
(T12)

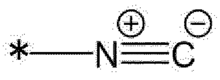
(T13)

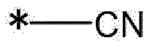
(T14)

Examples of the combination of p, m, n, and k in Formula (1) include the following aspects.
(p, m, n, k) = (0, 1, 0, 1), (0, 1, 1, 0), (1, 0, 1, 0), or (0, 2, 0, 0)

From the viewpoint of increasing the polymerization rate and increasing the molecular weight, in Formula (1), as the combination of p, m, n, and k, (p, m, n, k) is preferably (0, 1, 0, 1), (0, 1, 1, 0), or (1, 0, 1, 0).

In a case in which n is 1 or more, from the viewpoint of increasing the polymerization rate, each $Z^1$ is independently a group represented by any one of Formulas (T1) to (T14), preferably a group represented by any one of Formulas (T1) to (T7), more preferably a group represented by any one of Formulas (T1) to (T3), and still more preferably a group represented by Formula (T1).

In Formulas (T1) to (T14), each $A^1$ independently represents a hydrogen atom, a chlorine atom, a methyl group, a tert-butyl group, -OR, $-NR_2$, or -SR, each $A^2$ independently represents a chlorine atom, a methyl group, a tert-butyl group, -OR, $-NR_2$, or -SR, $A^3$ represents a hydrogen atom, a chlorine atom, a tert-butyl group, a tert-butoxy group, $-NR_2$, or -SR, each R independently represents a methyl group or a tert-butyl group, and * represents a binding site. In particular, it is preferable that each $A^1$ independently represents a methyl group, a tert-butyl group, -OR, or $-NR_2$, each $A^2$ independently represents a methyl group, a tert-butyl group, -OR, or $-NR_2$, and each R independently represents a methyl group or a tert-butyl group. $A^3$ preferably represents a tert-butyl group or a tert-butoxy group.

In the compound represented by Formula (1), examples of $Z^1$ include the following compounds.

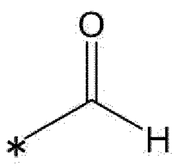
(T1-1)

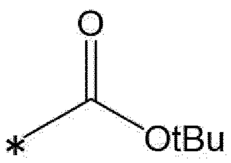
(T1-2)

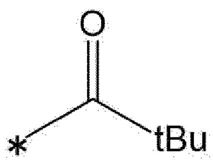
(T1-3)

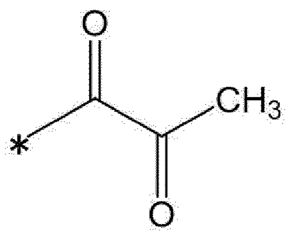
(T2-1)

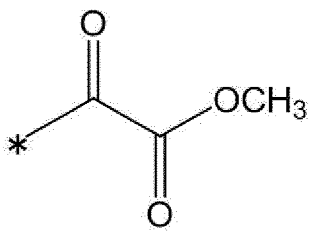
(T2-2)

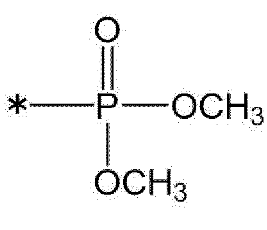
(T3-1)

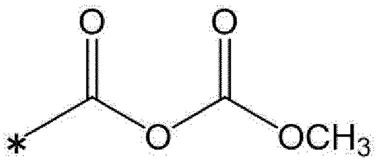

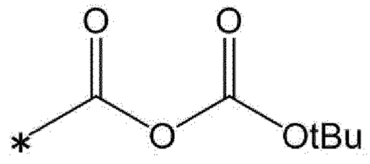

(T5-1) (T5-2)

Hereinafter, specific examples of the compound represented by Formula (1) will be given, but the compound represented by Formula (1) is not limited thereto.

tBu—O—tBu tBuOH

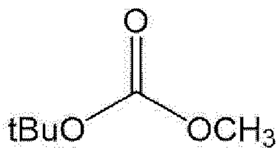

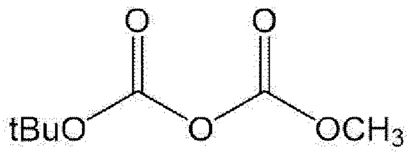

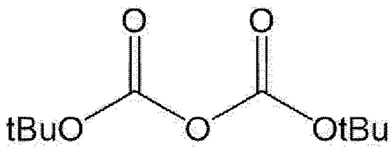

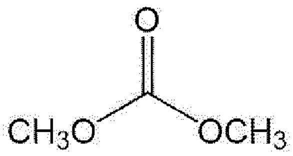

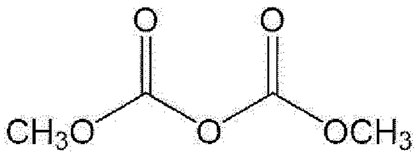

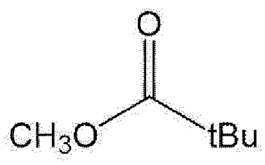

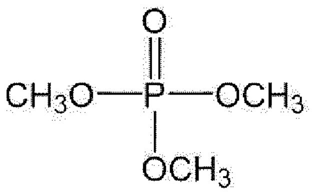

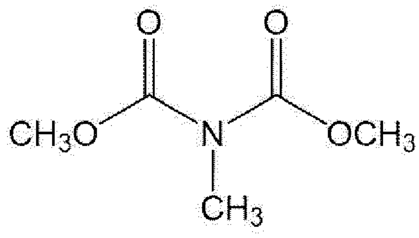

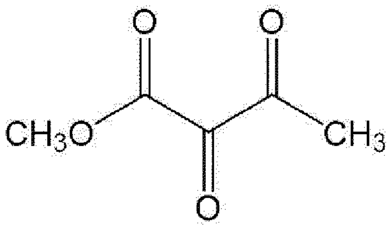

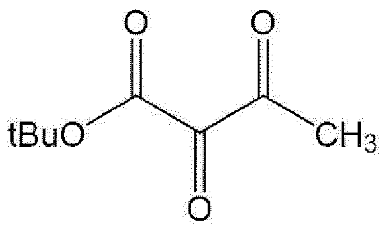

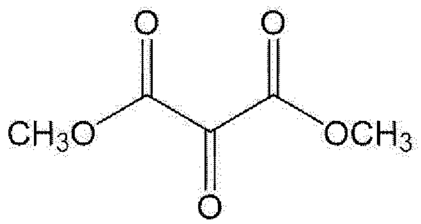

<Compound Represented by Formula (2)>

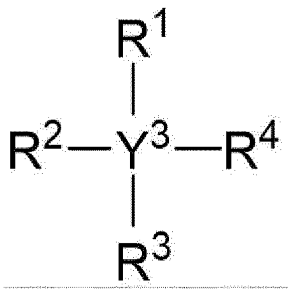

(2)

In Formula (2), $Y^3$ represents a carbon atom or a silicon atom.

Each of $R^1$ to $R^4$ independently represents a methyl group, a tert-butyl group, or a tert-butoxy group.

Hereinafter, specific examples of the compound represented by Formula (2) will be given, but the compound represented by Formula (2) is not limited thereto.

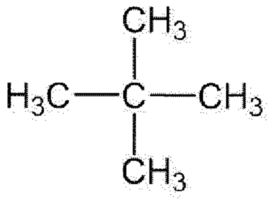

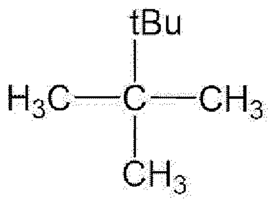

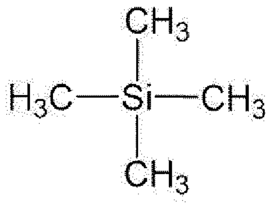

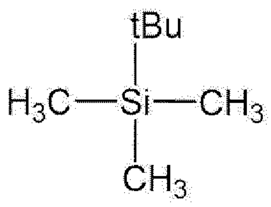

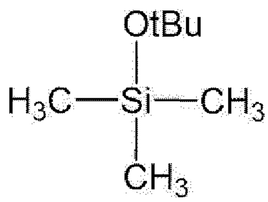

From the viewpoint of increasing the polymerization rate and increasing the molecular weight, in Formula (2), $Y^3$ is preferably a carbon atom.

From the viewpoint of increasing the polymerization rate and increasing the molecular weight, in Formula (2), $R^1$ to $R^4$ are preferably a methyl group.

In the polymerization solvent A, a compound corresponding to the compound represented by Formula (1) and corresponding to the compound represented by Formula (2) is regarded as the compound represented by Formula (1). That is, the compound represented by Formula (1) is not included in the compound represented by Formula (2).

For example, di-tert-butyl ether corresponds to the compound represented by Formula (1) and corresponds to the compound represented by Formula (2), but is regarded as the compound represented by Formula (1). That is, the di-tert-butyl ether is not included in the compound represented by Formula (2).

The proportion of the polymerization solvent A in the polymerization medium is preferably 70 mol% or more and more preferably 95 mol% or more.

<Other Polymerization Solvent>

In the method for producing a fluorine-containing copolymer of the disclosure, the polymerization medium may contain a polymerization solvent other than the polymerization solvent A.

Examples of the other polymerization solvent include aromatic hydrocarbon-based solvents such as benzene, toluene, and xylene; sulfoxide-based solvents such as dimethyl sulfoxide (DMSO); ketone-based solvents such as acetone and 2-butanone (methyl ethyl ketone); ether-based solvents such as tetrahydrofuran (THF) and dioxane; ester-based solvents such as ethyl acetate; halogen-based solvents such as hexafluoroisopropanol, chloroform, 1H-perfluorohexane, 1H,1H,1H,2H,2H-perfluorooctane, 1,3-bis(trifluoromethyl)benzene, 1,4-bis(trifluoromethyl)benzene, benzotrifluoride, chlorobenzene, and 1,2-dichlorobenzene; and water.

<Polymerization Method>

The polymerization in the method for producing a fluorine-containing copolymer of the disclosure may be solution

polymerization, and may be suspension polymerization. The solution polymerization method is a method in which polymerization is performed in a state in which a monomer is dissolved in a polymerization medium. The suspension polymerization method is a method in which polymerization is performed in a state in which a monomer is suspended in a polymerization medium containing water.

-Solution Polymerization-

In the method for producing a fluorine-containing copolymer of the disclosure, it is preferable to perform solution polymerization using above-described monomer in the polymerization medium. In the solution polymerization, the proportion of water in the polymerization medium is preferably less than 10 vol%.
In the solution polymerization, the polymerization medium is not particularly limited as long as it is a polymerization medium containing the at least one polymerization solvent A selected from the group consisting of compounds represented by Formula (1) and Formula (2). Preferred aspects of the compounds represented by Formula (1) and Formula (2) are as described above.
In a case in which n is 1 or more, from the viewpoint of increasing the polymerization rate, each $Z^1$ is independently preferably a group represented by any one of Formulas (T1) to (T7), more preferably a group represented by any one of Formulas (T1) to (T3), and still more preferably a group represented by Formula (T1).
From the viewpoint of increasing the polymerization rate and increasing the molecular weight, in Formula (2), $Y^3$ is preferably a carbon atom.
From the viewpoint of increasing the polymerization rate and increasing the molecular weight, in Formula (2), $R^1$ to $R^4$ are preferably a methyl group.
In the solution polymerization, from the viewpoint of increasing the polymerization rate, the polymerization medium preferably contains no other polymerization solvent, and preferably contains only the polymerization solvent A.

-Suspension Polymerization-

In the method for producing a fluorine-containing copolymer of the disclosure, it is preferable to perform suspension polymerization using the monomer in the a polymerization medium containing the at least one polymerization solvent A selected from the group consisting of compounds represented by Formula (1) and Formula (2) and incompatible with water, and water. In the suspension polymerization, the proportion of water in the polymerization medium is preferably from 10 vol% to 80 vol%.
In Formula (1), $Y^1$ represents an oxygen atom,

k is 0, each of p, m, n, and k is independently an integer satisfying p + m = 1 or more and p + m + n = 2,
when p is 1 or more, n is 1 or more,
each $Z^1$ is independently a group represented by any one of Formulas (T1) to (T3), Formula (T7), Formula (T8), or Formula (T10),
in Formula (2), $Y^3$ represents a carbon atom or a silicon atom,
each of $R^1$ to $R^4$ independently represents a methyl group, a tert-butyl group, or a tert-butoxy group, and
in Formulas (T1) to (T3), Formula (T7), Formula (T8), and Formula (T10), each $A^1$ independently represents a hydrogen atom, a methyl group, a tert-butyl group, -OR, or $-NR_2$, each $A^2$ independently represents a methyl group, a tert-butyl group, -OR, or $-NR_2$, $A^3$ represents a hydrogen atom, a tert-butyl group, a tert-butoxy group, or $-NR_2$, each R independently represents a methyl group or a tert-butyl group, and * represents a binding site.

In a case in which n is 1 or more, from the viewpoint of increasing the polymerization rate, each $Z^1$ is independently preferably a group represented by any one of Formulas (T1) to (T3), and more preferably a group represented by Formula (T1).
From the viewpoint of increasing the polymerization rate and increasing the molecular weight, in Formula (2), $Y^3$ is preferably a carbon atom.
From the viewpoint of increasing the polymerization rate and increasing the molecular weight, in Formula (2), $R^1$ to $R^4$ are preferably a methyl group.
In the suspension polymerization, from the viewpoint of increasing the polymerization rate, the polymerization medium preferably contains no other polymerization solvent. The proportion of the polymerization solvent A and water in the polymerization medium is preferably 90 mol% or more, and more preferably composed only of the polymerization solvent A and water.

(Monomer Containing Vinylidene Fluoride)

In the method for producing a fluorine-containing copolymer of the disclosure, a monomer containing vinylidene fluoride (hereinafter, referred to as "VDF") is polymerized. That is, a fluorine-containing copolymer obtained by the method for producing a fluorine-containing copolymer of the disclosure includes a structural unit derived from VDF. The fluorine-containing copolymer may be a homopolymer composed only of VDF, that is, may be polyvinylidene fluoride (PVDF).

In the disclosure, the "monomer" is a compound used for polymerization, and means a polymerizable compound having a polymerizable group. In the disclosure, the "monomer" means a compound having a number average molecular weight of 1000 or less, and is distinguished from an oligomer and a polymer.

A monomer other than VDF may be included in the monomer used for polymerization. That is, the fluorine-containing copolymer may include a structural unit other than the structural unit derived from VDF. The monomer other than VDF may be used singly, or in combination of two or more kinds thereof.

The monomer other than VDF is not particularly limited as long as it has a polymerizable group.

The polymerizable group is preferably a radical polymerizable group and more preferably an ethylenically unsaturated group. Examples of the ethylenically unsaturated group include a vinyl group, a vinyl ether group, a vinyl ester group, and a (meth)acryloyl group.

Examples of the monomer other than VDF include olefin, vinyl ether, vinyl ester, vinyl amide, styrenes, maleimides, (meth)acrylic acid ester, (meth)acrylic acid, (meth)acrylamide, and (meth)acrylonitrile.

The monomer used for polymerization preferably further include a fluorine-containing monomer having a fluorine atom other than VDF, and the fluorine-containing monomer preferably includes at least one selected from the group consisting of fluorine-containing monomers represented by the following Formulas (X1), (X2), and (X3).

$CX^1X^2=C(X^3)-(O)_{n1}-Rf^1R^{10}$ ... (X1)

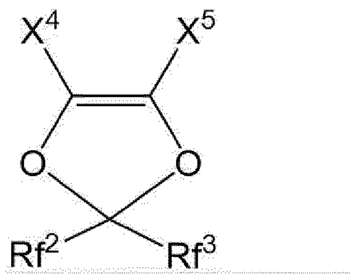

(X2)

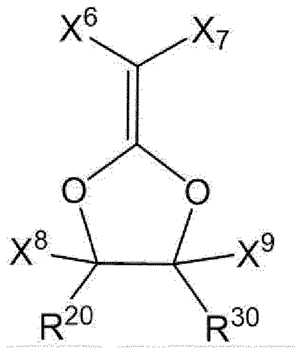

(X3)

In Formula (X1), each of $X^1$, $X^2$, and $X^3$ independently represents a hydrogen atom or a fluorine atom,

- $Rf^1$ represents a perfluoroalkylene group having from 1 to 5 carbon atoms, and an etheric oxygen atom may be contained between carbon-carbon bonds of the perfluoroalkylene group,
- $R^{10}$ represents a hydrogen atom, a fluorine atom, $-SO_2R^{11}$, $-COR^{11}$, or a cyano group,
- each $R^{11}$ independently represents a hydrogen atom, a fluorine atom, a hydroxyl group, or an alkoxy group, and
- n1 is 0 or 1.

In Formula (X2), each of $X^4$ and $X^5$ independently represents a hydrogen atom or a fluorine atom,

each of $Rf^2$ and $Rf^3$ independently represents a perfluoroalkyl group having from 1 to 5 carbon atoms or a fluorine atom, and an etheric oxygen atom may be contained between carbon-carbon bonds of the perfluoroalkyl group.

In Formula (X3), each of $X^6$, $X^8$, and $X^9$ independently represents a hydrogen atom or a fluorine atom,

each $X^7$ independently represents a hydrogen atom, a fluorine atom, or a trifluoromethyl group,
each $R^{20}$ independently represents a fluorine atom or $-Rf^4-R^{30}$,
each $R^{40}$ independently represents a fluorine atom or $-Rf^5-R^{50}$,
each of $Rf^4$ and $Rf^5$ independently represents a perfluoroalkylene group having from 1 to 5 carbon atoms, and an etheric oxygen atom may be contained between carbon-carbon bonds of the perfluoroalkylene group, and
each of $R^{30}$ and $R^{50}$ independently represents $-SO_2R^{11}$, $-COR^{11}$, or a cyano group.

<Fluorine-Containing Monomer Represented by Formula (X1)>

In Formula (X1), the number of carbon atoms of the perfluoroalkylene group represented by $Rf^1$ is preferably from 1 to 3.

From the viewpoint of chemical stability of the monomer and the polymer, $R^{10}$ is preferably a hydrogen atom or a fluorine atom.

In Formula (X1), examples of the compound in which n1 is 1 include perfluoro(alkyl vinyl ether) (hereinafter, also referred to as "PAVE").

Examples of PAVE include $CF_2=CFOCF_3$ (hereinafter, also referred to as "PMVE"), $CF_2=CFOCF_2CF_3$, $CF_2=CFOCF_2CF_2CF_3$(hereinafter, also referred to as "PPVE"), $CF_2=CFOCF_2CF_2CF_2CF_3$, and $CF_2=CFO(CF_2)_8F$.

Among them, PAVE is preferably PMVE or PPVE.

In Formula (X1), examples of the compound in which n1 is 0 include hexafluoropropylene (hereinafter, also referred to as "HFP") and fluoroalkylethylene (hereinafter, also referred to as "FAE").

Examples of FAE include $CH_2=CH(CF_2)_2F$ (hereinafter, also referred to as "PFEE"), $CH_2=CH(CF_2)_3F$, $CH_2=CH(CF_2)_4F$ (hereinafter, also referred to as "PFBE"), $CH_2=CF(CF_2)_3H$, $CH_2=CF(CF_2)_4H$.

Among them, FAE is preferably PFEE or PFBE.

<Fluorine-Containing Monomer Represented by Formula (X2)>

In Formula (X2), the number of carbon atoms of the perfluoroalkyl groups represented by $Rf^2$ and $Rf^3$ are each independently preferably from 1 to 3.

Examples of the fluorine-containing monomer represented by Formula (2) include the following compounds.

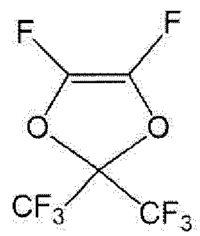
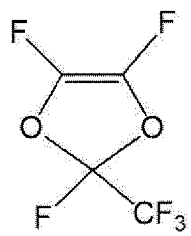
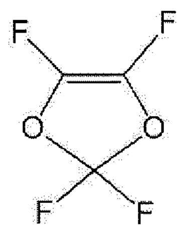

<Fluorine-Containing Monomer Represented by Formula (X3)>

In Formula (X3), the number of carbon atoms of the perfluoroalkylene groups represented by $Rf^4$ and $Rf^5$ are each independently preferably from 1 to 3.

Examples of the fluorine-containing monomer represented by Formula (X3) include the following compounds.

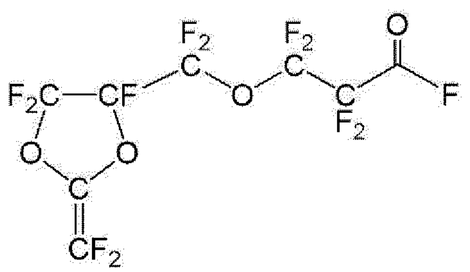
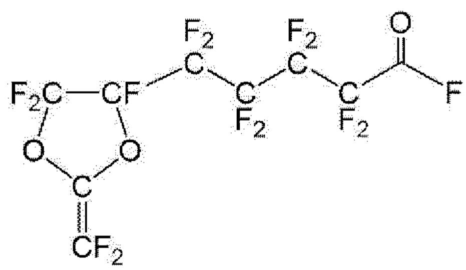

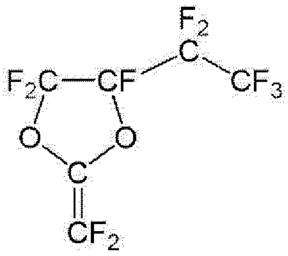 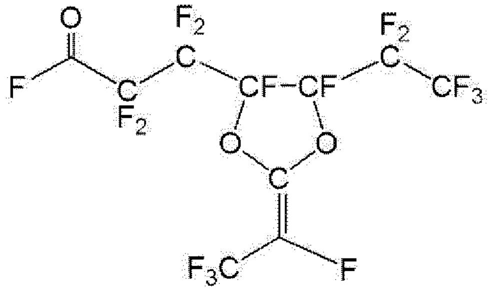

<Other Fluorine-Containing Monomer>

The monomer used for polymerization may include other fluorine-containing monomer which is other than the fluorine-containing monomers represented by (X1), Formula (X2), and Formula (X3).

Examples of the other fluorine-containing monomer include

fluoroolefins such as tetrafluoroethylene (TFE), vinylidene fluoride, vinyl fluoride, trifluoroethylene, and hexafluoroisobutylene; and

fluorine-containing monomers having two ethylenically unsaturated groups such as $CF_2=CFOCF_2CF=CF_2$ and $CF_2=CFO(CF_2)_2CF=CF_2$.

Among them, the monomer used for polymerization preferably further includes at least one fluorine-containing monomer selected from the group consisting of HFP and TFE.

That is, the fluorine-containing copolymer obtained by the method for producing a fluorine-containing copolymer of the disclosure is preferably a copolymer including at least one selected from the group consisting of a structural unit derived from VDF, a structural unit derived from HFP, and a structural unit derived from TFE.

Examples of a preferred embodiment include a copolymer including a structural unit derived from VDF and a structural unit derived from HFP. This copolymer is called "FKM".

<Non-Fluorinated Monomer>

The monomer used for polymerization may include a monomer having no fluorine atom (hereinafter, referred to as "non-fluorinated monomer").

The non-fluorinated monomer is not particularly limited as long as it does not have a fluorine atom and has a polymerizable group.

The polymerizable group is preferably a radical polymerizable group and more preferably an ethylenically unsaturated group. Examples of the ethylenically unsaturated group include a vinyl group, a vinyl ether group, a vinyl ester group, and a (meth)acryloyl group.

Examples of the non-fluorinated monomer include compounds having no fluorine atom of olefin, vinyl ether, vinyl ester,

vinyl amide, styrenes, maleimides, (meth)acrylic acid ester, (meth)acrylic acid, (meth)acrylamide, and (meth)acrylonitrile.

In particular, from the viewpoint of the polymerization rate and the copolymerizability with a fluorine-containing monomer, the monomer used for polymerization preferably further includes a non-fluorinated monomer having no fluorine atom and having an ethylenically unsaturated group.

From the viewpoint of solubility, the monomer used for polymerization preferably further includes a non-fluorinated monomer having no fluorine atom, having an ethylenically unsaturated group, and having a reactive group.

The reactive group is preferably at least one selected from the group consisting of a reactive silyl group, an amino group, an isocyanato group, a hydroxyl group, an epoxy group, an acid anhydride residue, an alkoxycarbonyl group, a carboxy group, and a carboxylic acyl group, and is more preferably at least one selected from the group consisting of a hydroxyl group, an acid anhydride residue, an alkoxylcarbonyl group, a carboxy group, and a carboxylic acyl group.

In a case in which the monomer used for polymerization includes a non-fluorinated monomer having no fluorine atom, having an ethylenically unsaturated group, and having a reactive group, it is preferable that the polymerization medium does not contain water.

The reactive silyl group means a group in which a reactive group is bonded to a silicon atom (Si atom). The reactive group is preferably a hydrolyzable group or a hydroxyl group.

The hydrolyzable group is a group that becomes a hydroxyl group by a hydrolysis reaction. That is, the hydrolyzable silyl group represented by Si-L becomes a silanol group represented by Si-OH by a hydrolysis reaction.

Examples of the hydrolyzable group include an alkoxy group, an aryloxy group, a halogen atom, an acyl group, an acyloxy group, and an isocyanato group (-NCO). The alkoxy group is preferably an alkoxy group having from 1 to 4 carbon atoms. However, the aryl group of the aryloxy group includes a heteroaryl group. The halogen atom is preferably a chlorine atom. The acyl group is preferably an acyl group having from 1 to 6 carbon atoms. The acyloxy group is preferably an acyloxy group having from 1 to 6 carbon atoms.

The reactive silyl group is preferably a group represented by the following Formula (A).

$$-Si(R^A)_wL_{3-w} \cdots \qquad (A)$$

Each $R^A$ is independently a hydrocarbon group, each L is independently a hydrolyzable group or a hydroxyl group, and n is an integer from 0 to 2.

In a case in which there are a plurality of reactive silyl groups in one molecule, the plurality of reactive silyl groups may be the same as or different from each other. From the viewpoint of availability of raw materials and ease of production of the compound, the plurality of reactive silyl groups are preferably the same.

Each $R^A$ is independently a hydrocarbon group and preferably a saturated hydrocarbon group. The number of carbon atoms of $R^A$ is preferably from 1 to 6, more preferably from 1 to 3, and still more preferably 1 to 2.

As the hydrolyzable group, those described above are preferable.

In particular, from the viewpoint of ease of production of the compound, L is preferably an alkoxy group having from 1 to 4 carbon atoms or a halogen atom. From the viewpoint of more excellent storage stability of the compound, L is preferably an alkoxy group having from 1 to 4 carbon atoms and more preferably an ethoxy group or a methoxy group.

w is an integer from 0 to 2, preferably 0 or 1, and more preferably 0.

In a case in which w is 1 or less, a plurality of L present in one molecule may be the same as or different from each other. From the viewpoint of availability of raw materials and ease of production of the compound, the plurality of L are preferably the same. In a case in which w is 2, a plurality of $R^A$ present in one molecule may be the same as or different from each other. From the viewpoint of availability of raw materials and ease of production of the compound, the plurality of $R^A$ are preferably the same.

Examples of the monomer having a reactive silyl group include vinyltrimethoxysilane, vinyltriethoxysilane, p-styryltrimethoxysilane, 2-methacryloxyethyltrimethoxysilane, 2-methacryloxyethyltriethoxysilane, 3-methacryloxypropylmethyldimethoxysilane, 3-methacryloxypropyltrimethoxysilane, 3-methacryloxypropylmethyldiethoxysilane, 3-methacryloxypropyltriethoxysilane, 4-methacryloxybutyltrimethoxysilane, 4-methacryloxybutyltriethoxysilane, 2-acryloxyethyltrimethoxysilane, 2-acryloxyethyltriethoxysilane, 3-acryloxypropyltrimethoxysilane, 3-acryloxypropyltriethoxysilane, 4-acryloxybutyltrimethoxysilane, and 4-acryloxybutyltriethoxysilane.

Examples of the monomer having an amino group include:

(meth)acrylates having an amino group such as N,N-dimethylaminoethyl (meth)acrylate, N,N-dimethylaminopropyl (meth)acrylate, 1-(N,N-dimethylamino)-1,1-dimethylmethyl (meth)acrylate, N,N-dimethylaminohexyl (meth)acrylate, N,N-diethylaminoethyl (meth)acrylate, N,N-diisopropylaminoethyl (meth)acrylate, N,N-di-n-butylaminoethyl (meth)acrylate, N,N-di-i-butylaminoethyl (meth)acrylate, morpholinoethyl (meth)acrylate, piperidinoethyl (meth)acrylate, 1-pyrrolidinoethyl (meth)acrylate, N,N-methyl-2-pyrrolidylaminoethyl (meth)acrylate, N,N-methylphenylaminoethyl (meth)acrylate, and t-butylaminoethyl (meth)acrylate; and

(meth)acrylamides having an amino group such as 2-(N,N-dimethylamino)ethyl (meth)acrylamide, 2-(N,N-diethylamino)ethyl (meth)acrylamide, 3-(N,N-diethylamino)propyl (meth)acrylamide, 3-(N,N-dimethylamino)propyl (meth)acrylamide, 1-(N,N-dimethylamino)-1,1-dimethylmethyl (meth)acrylamide, and 6-(N,N-diethylamino)hexyl (meth)acrylamide.

Examples of the monomer having an isocyanato group include 2-isocyanatoethyl (meth)acrylate, 3-isocyanatopropyl (meth)acrylate, 4-isocyanatobutyl (meth)acrylate, and 2-(2-methacryloyloxyethyloxy)ethyl isocyanate.

The monomer having an isocyanato group may be blocked with a blocking agent. Examples of the blocking agent include pyrazoles such as 3,5-dimethylpyrazole; oximes such as 2-butanone oxime; and lactams such as ε-caprolactam.

Examples of the monomer having a hydroxyl group include: (meth)acrylates such as 2-hydroxyethyl (meth)acrylate, 3-hydroxypropyl (meth)acrylate, 2-hydroxypropyl (meth)acrylate, 2-hydroxybutyl (meth)acrylate, 3-hydroxybutyl (meth)acrylate, and 4-hydroxybutyl (meth)acrylate;

vinyl ethers such as hydroxyethyl vinyl ether, hydroxypropyl vinyl ether, and hydroxybutyl vinyl ether; and

allyl ethers such as hydroxyethyl allyl ether, hydroxypropyl allyl ether, and hydroxybutyl allyl ether.

Examples of the monomer having an epoxy group include glycidyl (meth)acrylate.

Examples of the monomer having an acid anhydride residue include itaconic anhydride, citraconic anhydride, 5-norbornene-2,3-dicarboxylic anhydride, and maleic anhydride.

Examples of the monomer having an alkoxycarbonyl group include methyl (meth)acrylate, butyl acrylate, and methyl 3-butenoate.

Examples of the polymerizable monomer having a carboxy group include (meth)acrylic acid, itaconic acid, 2-(meth)acryloyloxyethylsuccinic acid, and 2-(meth)acryloyloxyhexahydrophthalic acid.

Examples of the monomer having a carboxylic acyl group include vinyl methyl ketone, allyl methyl ketone, and vinyl acetate.

In the method for producing a fluorine-containing copolymer of the disclosure, as for the content of the structural unit derived from VDF, the structural unit derived from VDF is preferably 30 mol% or more, more preferably 40 mol% or more, and still more preferably 50 mol% or more with respect to the total structural units of the obtained fluorine-containing copolymer.

The content of the structural unit derived from the monomer other than VDF is preferably 70 mol% or less, more preferably 60 mol% or less, and still more preferably 50 mol% or less with respect to the total structural units of the obtained fluorine-containing copolymer.

As a preferred embodiment, the monomer used for polymerization further includes at least one fluorine-containing monomer selected from the group consisting of HFP and TFE, and a non-fluorinated monomer having no fluorine atom and having a (meth)acryloyl group.

In the above-described embodiment, the content of the structural unit derived from VDF is preferably 30 mol% or more, more preferably 40 mol% or more, and still more preferably 50 mol% or more with respect to the total structural units of the obtained fluorine-containing copolymer.

In the above-described embodiment, the content of the structural unit derived from at least one fluorine-containing monomer selected from the group consisting of HFP and TFE is preferably 60 mol% or less, more preferably 50 mol% or less, and still more preferably 40 mol% or less with respect to the total structural units of the obtained fluorine-containing copolymer.

In the above-described embodiment, the content of the structural unit derived from the non-fluorinated monomer having no fluorine atom and having a (meth)acryloyl group is preferably from 1 to 20 mol%, more preferably from 1 to 15 mol%, and still more preferably from 1 to 10 mol% with respect to the total structural units of the obtained fluorine-containing copolymer.

In the method for producing a fluorine-containing copolymer of the disclosure, the content of VDF is preferably 10 mol% or more and more preferably 15 mol% or more with respect to the total amount of monomers used for polymerization.

The content of the other monomer which is other than VDF is preferably 90 mol% or less and more preferably 85 mol% or less with respect to the total amount of monomers used for polymerization.

As a preferred embodiment, the monomer used for polymerization further includes at least one fluorine-containing monomer selected from the group consisting of HFP and TFE, and a non-fluorinated monomer having no fluorine atom and having a (meth)acryloyl group.

In the above-described embodiment, the content of VDF is preferably 10 mol% or more and more preferably 15 mol% or more with respect to the total amount of monomers used for polymerization.

In the above-described embodiment, the content of at least one fluorine-containing monomer selected from the group consisting of HFP and TFE is 90 mol% or less and more preferably 85 mol% or less with respect to the total amount of monomers used for polymerization.

In the above-described embodiment, the content of the non-fluorinated monomer having no fluorine atom and having a (meth)acryloyl group is preferably from 1 to 20 mol%, more preferably from 1 to 15 mol%, and still more preferably from 1 to 10 mol% with respect to the total amount of monomers used for polymerization.

(Polymerization Initiator)

In the method for producing a fluorine-containing copolymer of the disclosure, a polymerization initiator is preferably used for initiating the polymerization reaction.

The polymerization initiator is preferably a radical polymerization initiator. Examples of the radical polymerization initiator include azo compounds such as azobisisobutyronitrile and 2,2'-azobis(4-methoxy-2,4-dimethylvaleronitrile); peroxydicarbonates such as diisopropyl peroxydicarbonate; peroxy esters such as tert-butyl peroxypivalate, tert-butyl peroxyisobutyrate, and tert-butyl peroxyacetate; non-fluorine-containing diacyl peroxides such as diisobutyryl peroxide, octanoyl peroxide, benzoyl peroxide, and lauroyl peroxide; fluorine-containing diacyl peroxides such as $(Z(CF_2)_pCOO)_2$ (Z is a hydrogen atom, a fluorine atom, or a chlorine atom, and p is an integer from 1 to 10); perfluoro-tert-butyl peroxide; and inorganic peroxides such as potassium persulfate, sodium persulfate, and ammonium persulfate.

(Chain Transfer Agent)

In the method for producing a fluorine-containing copolymer of the disclosure, the polymerization reaction may be performed in the presence of a chain transfer agent. In the presence of the chain transfer agent, the molecular weight of the fluorine-containing polymer to be produced is easily adjusted.

Examples of the chain transfer agent include alcohols such as methanol, ethanol, 2,2,2-trifluoroethanol, 2,2,3,3-tetrafluoropropanol, 1,1,1,3,3,3-hexafluoroisopropanol, and 2,2,3,3,3-pentafluoropropanol; hydrocarbons such as n-pentane, n-hexane, and cyclohexane; hydrofluorocarbons such as $CF_2H_2$; ketones such as acetone;mercaptans such as methyl mercaptan; esters such as methyl acetate and ethyl acetate; and ethers such as diethyl ether and methyl ethyl ether.

(Polymerization Form)

In the method for producing a fluorine-containing copolymer of the disclosure, for example, the polymerization reaction is allowed to proceed by continuously or intermittently adding a monomer containing VDF into a polymerization medium. In the method for producing a fluorine-containing copolymer of the disclosure, it is preferable that there is only one reaction step.

For example, in the case of obtaining a block copolymer, a polymerization reaction is performed using only a first monomer among monomers used for polymerization (first step), and after completion of the reaction in the first step, a polymerization reaction is performed by adding a second monomer (second step), thereby obtaining a structure in which a first block derived from the first monomer and a second block derived from the second monomer are linked to each other.

In this regard, in the case of obtaining a random copolymer, by performing the polymerization reaction once using all the monomers used for polymerization, a structure in which structural units derived from the monomers used for polymerization are randomly arranged is obtained. All the monomers used for polymerization reaction may be added into the polymerization medium before the completion of the polymerization reaction, and all the monomers are not necessarily added at a time.

(Polymerization Conditions)

In the method for producing a fluorine-containing copolymer of the disclosure, $0.5 \leq M_{sol} \times S/M_{mon} \leq 1.0$ is preferably satisfied in a stage during the polymerization, where $M_{sol}$ is the amount of substance (mol) of the polymerization solvent A, S is the solubility (mol/mol) of VDF in the polymerization solvent A, and $M_{mon}$ is the amount of substance (mol) of VDF dissolved in the polymerization medium.

In the disclosure, the term "during the polymerization" means the time during which a fluorine-containing copolymer containing VDF is produced.

In a case in which the polymerization medium is composed only of the polymerization solvent A, and no polymerization medium other than the polymerization solvent A is contained, $M_{sol} \times S/M_{mon}$ is 1.0. In a case in which the polymerization medium contains a polymerization medium other than the polymerization solvent A, $M_{sol} \times S/M_{mon}$ is less than 1.0.

In a case in which $M_{sol} \times S/M_{mon}$ is from 0.5 to 1.0, chain transfer by the polymerization medium is suppressed to improve the polymerization rate. From the viewpoint of further improving the polymerization rate, $M_{sol} \times S/M_{mon}$ is more preferably from 0.7 to 1.0 and still more preferably from 0.85 to 1.0.

<Amount of Substance of Polymerization Solvent A, $M_{sol}$>

$M_{sol}$, which represents the amount of substance of the polymerization solvent A, is calculated using the following equation.

$M_{sol}$ (mol) = weight (g) of the polymerization solvent A/molecular weight of the polymerization solvent A

As the weight of the polymerization solvent A, a value obtained by measurement under atmospheric pressure is employed.

<Solubility S of VDF in Polymerization Solvent A>

The solubility of VDF in the polymerization solvent A, S, is calculated by the following method.

First, the vapor pressure of the polymerization solvent A, $P_{sol}$, is measured. $P_{sol}$ is a pressure indicated when the

polymerization medium is placed in a stainless steel autoclave equipped with a stirrer, degassing by freeze-pump-thaw is performed twice, and then the internal temperature of the reactor is held at a predetermined temperature T. T means the liquid phase temperature. The temperature of the gas-phase part is regarded as the same as the liquid phase temperature.

The weighed polymerization solvent A is placed in a stainless steel autoclave equipped with a stirrer. Based on the weight (g) of the weighed polymerization solvent A, the amount of substance of the polymerization solvent A, M' (mol), is calculated.

Subsequently, the weighed VDF gas is placed in the stainless steel autoclave equipped with a stirrer. The charged amount of the VDF gas, $M_{all}$ (mol), is calculated according to the following equation using the weight of the weighed gas, W (g).

$$M_{all} = W/64$$

After a sufficient length of time, when the pressure becomes constant, this pressure is defined as the total pressure $P_{all}$.

The partial pressure of the VDF gas, $P_{mon}$, is calculated according to the following equation.

$$P_{mon} = P_{all} - P_{sol}$$

The volume of the gas-phase part of the stainless steel autoclave equipped with a stirrer, V, is calculated according to the following equation.

V = volume of the stainless steel autoclave equipped with a stirrer - volume of the polymerization solvent A

The amount of substance of the VDF gas present in the gas-phase part of the stainless steel autoclave equipped with a stirrer, $M_g$ (mol), is calculated according to the following equation. R means a gas constant.

$$M_g = P_{mon}V/RT$$

The amount of substance of the VDF gas dissolved in the polymerization solvent A, $M'_{mon}$ (mol), is calculated according to the following equation.

$$M'_{mon} = M_{all} - M_g$$

The solubility of VDF in the polymerization solvent A, S, is calculated according to the following equation.

$$S = M'_{mon}/M'$$

<Amount of Substance of VDF Dissolved in Polymerization Medium, $M_{mon}$>

The amount of substance of VDF dissolved in the polymerization medium, $M_{mon}$, is calculated by the following method.

First, the vapor pressure of the polymerization medium, $P'_{sol}$, is measured. $P'_{sol}$ is a pressure indicated when the polymerization medium is placed in a stainless steel autoclave equipped with a stirrer, degassing by freeze-pump-thaw is performed twice, and then the internal temperature of the reactor is held at a predetermined temperature T. T means the liquid phase temperature. The temperature of the gas-phase part is regarded as the same as the liquid phase temperature.

Subsequently, the weighed VDF gas is placed in the stainless steel autoclave equipped with a stirrer. The charged amount of the VDF gas, $M'_{all}$ (mol), is calculated according to the following equation using the weight of the weighed gas, W' (g).

$$M'_{all} = W'/64$$

After a sufficient length of time, when the pressure becomes constant, this pressure is defined as the total pressure $P'_{all}$.

The partial pressure of the VDF gas, $P'_{mon}$, is calculated according to the following equation.

$$P'_{mon} = P'_{all} - P'_{sol}$$

The volume of the gas-phase part of the stainless steel autoclave equipped with a stirrer, V', is calculated according to the following equation.

V' = volume of the stainless steel autoclave equipped with a stirrer - volume of the polymerization medium

The amount of substance of the VDF gas present in the gas-phase part of the stainless steel autoclave equipped with a stirrer, $M'_g$ (mol), is calculated according to the following equation. R means a gas constant.

$$M'_g = P'_{mon} \times V'/RT$$

The amount of substance of the VDF gas dissolved in the polymerization medium, $M_{mon}$ (mol), is calculated according to the following equation.

$$M_{mon} = M'_{all} - M'_g$$

In the method for producing a fluorine-containing copolymer of the disclosure, the polymerization temperature is preferably from 0°C to 100°C and more preferably from 20°C to 90°C. The polymerization pressure is preferably from 0.1 MPaG to 10 MPaG and more preferably from 0.5 MPaG to 5 MPaG. The polymerization time is preferably from 1 hour to 30 hours and more preferably from 2 hour to 20 hours.

[Fluorine-Containing Polymer]

The fluorine-containing copolymer of the disclosure includes a structural unit derived from VDF.

The fluorine-containing copolymer of the disclosure may include a structural unit other than the structural unit derived from VDF.

Examples

Hereinafter, the disclosure will be more specifically described with reference to Examples, but the disclosure is not limited to the following Examples without departing from the gist thereof.

[Example 1]

After a stainless steel autoclave having an internal volume of 600 mL and equipped with a stirrer was immersed in an ice-water bath and held for 10 minutes, 360 mL (1.88 mol) of di-tert-butyl carbonate (in the table, "$Boc_2O$") was charged as a polymerization medium, and degassing by freeze-pump-thaw was performed twice.

The internal temperature of the reactor was increased to 45°C with stirring, and VDF was injected as a monomer so that the internal pressure of the reactor was 2.0 MPaG. As a polymerization initiator, 13 mg (0.064 mmol) of diisopropyl peroxydicarbonate (product name "PEROYL IPP", manufactured by NOF Corporation, "IPP" in the table) was injected, and the reaction mixture was stirred at 200 rpm (200 revolutions per minute) for 5 hours while the internal temperature was kept at 45°C. Thus, a polymer solution containing a homopolymer of VDF was obtained.

The reactor was allowed to cool at room temperature, and unreacted VDF was discharged.

The obtained polymer solution was charged into methanol, and then the precipitate was collected by filtration. The precipitate was dried in a vacuum oven at 40°C for 12 hours. 1.3 g of a homopolymer of VDF was obtained.

Di-tert-butyl carbonate corresponds to the compound represented by Formula (1), in Formula (1), $Y^1$ is an oxygen atom, p is 0, m is 1, n is 1, k is 0, $Z^1$ is the group represented by Formula (T1), and in Formula (T1), $A^1$ is -OR, and R is a tert-butyl group.

[Example 2]

2.96 g of a homopolymer of VDF was obtained by the same method as in Example 1, except that the polymerization medium was changed to methyl pivalate (in the table, "MePiv"), the polymerization initiator was changed to diisobutyryl peroxide (product name "PEROYL IB", manufactured by NOF Corporation, "IBPO" in the table), and the polymerization temperature was changed to 30°C.

Methyl pivalate corresponds to the compound represented by Formula (1), in Formula (1), $Y^1$ is an oxygen atom, p is 1, m is 0, n is 1, k is 0, $Z^1$ is the group represented by Formula (T1), and in Formula (T1), $A^3$ is a tert-butyl group.

[Example 3]

4.4 g of a homopolymer of VDF was obtained by the same method as in Example 2, except that the polymerization medium was changed to tetramethylsilane (in the table, "TMS").
Tetramethylsilane corresponds to the compound represented by Formula (2), and in Formula (2), $Y^3$ is a silicon atom, and $R^1$ to $R^4$ is a methyl group.

[Example 4]

7.9 g of a homopolymer of VDF was obtained by the same method as in Example 2, except that the polymerization medium was changed to trimethyl phosphate (in the table, "TMP").
Trimethyl phosphate corresponds to the compound represented by Formula (1), in Formula (1), $Y^1$ is an oxygen atom, p is 1, m is 0, n is 1, k is 0, $Z^1$ is the group represented by Formula (T3), and in Formula (T3), $A^2$ is -OR, and R is a methyl group.

[Examples 5 and 6]

A copolymer of VDF and HFP was obtained by the same method as in Examples 1 and 2, except that a mixed gas of VDF and hexafluoropropylene (HFP) (VDF : HFP (molar ratio) = 15 : 85) was used as monomers.
In Example 5, 0.67 g of a copolymer (VDF unit : HFP unit = 71 : 29 (molar ratio)) was obtained.
In Example 6, 1.1 g of a copolymer (VDF unit : HFP unit = 72 : 28 (molar ratio)) was obtained.

[Example 7]

3.5 g of a copolymer of VDF, HFP, and TFE was obtained by the same method as in Example 3, except that a mixed gas of VDF, HFP, and tetrafluoroethylene (TFE) (VDF : HFP : TFE (molar ratio) = 28 : 61 : 11) was used as monomers. VDF unit : HFP unit : TFE unit was 63 : 16 : 21 (molar ratio).

[Example 8]

2.3 g of a copolymer of VDF and maleic anhydride was obtained by the same method as in Example 2, except that VDF and maleic anhydride (VDF : maleic anhydride (molar ratio) = 99 : 1) were used as monomers. VDF unit : maleic anhydride unit was 97 : 3 (molar ratio).

[Example 9]

0.74 g of a copolymer of VDF, HFP, and maleic anhydride was obtained by the same method as in Example 2, except that VDF, HFP, and maleic anhydride (VDF : HFP : maleic anhydride (molar ratio) = 14 : 85 : 1) were used as monomers. VDF unit : HFP unit : maleic anhydride unit was 71 : 27 : 2 (molar ratio).

[Example 10]

1.8 g of a homopolymer of VDF was obtained by the same method as in Example 2, except that the polymerization medium was changed to a mixture of methyl pivalate (MePiv) and methyl ethyl ketone (MEK) (molar ratio) = 85 : 15) (in the table, "MePiv/MEK = 85/15").

[Example 11]

0.72 g of a homopolymer of VDF was obtained by the same method as in Example 2, except that the polymerization medium was changed to a mixture of MePiv and MEK (MePiv : MEK (molar ratio) = 70 : 30) (in the table, "MePiv/MEK = 70/30").

[Example 12]

4.5 g of a homopolymer of VDF was obtained by the same method as in Example 2, except that the polymerization

medium was changed to a mixture of MePiv and trimethyl phosphate (MePiv : trimethyl phosphate (molar ratio) = 50 : 50) (in the table, "MePiv/TMP = 50/50").

[Example 13]

An attempt was made to obtain a homopolymer of VDF by the same method as in Example 2, except that the polymerization medium was changed to tert-butyl methyl ether (in the table, "TBME"). However, a copolymer was not obtained. tert-Butyl methyl ether does not correspond to the polymerization solvent A.

[Example 14]

An attempt was made to obtain a copolymer of VDF and norbornenoic anhydride by the same method as in Example 2, except that VDF and norbornenoic anhydride (VDF : norbornenoic anhydride (molar ratio) = 99 : 1) were used as monomers, and the polymerization medium was changed to 1H-perfluorohexane (in the table, "C6H"). Although a copolymer was obtained, introduction of an acid anhydride group was not confirmed by IR measurement. 1H-Perfluorohexane does not correspond to the polymerization solvent A.

[Example 15]

An attempt was made to obtain a copolymer of VDF, HFP, and norbornenoic anhydride by the same method as in Example 2, except that VDF, HFP, and norbornenoic anhydride (VDF : HFP: norbornenoic anhydride (molar ratio) = 14 : 85 : 1) were used as monomers, and the polymerization medium was changed to 1H-perfluorohexane (in the table, "C6H"). Although a copolymer was obtained, introduction of an acid anhydride group was not confirmed by IR measurement. 1H-Perfluorohexane does not correspond to the polymerization solvent A.

[Example 16]

1.2 g of a homopolymer of VDF was obtained by the same method as in Example 2, except that the polymerization medium was changed to a mixture of methyl pivalate and water (content of water: 20 vol%) (in the table, "MePiv/water").

[Example 17]

0.34 g of a copolymer of TFE and HFP was obtained by the same method as in Example 2, except that the polymerization medium was changed to a mixture of methyl pivalate and water (content of water: 20 vol%) (in the table, "MePiv/water"), and a mixed gas of VDF and HFP (VDF : HFP (molar ratio) = 15 : 85) was used as monomers. VDF unit : HFP unit was 73 : 27 (molar ratio).

The polymerization rate in the production methods of Examples 1 to 17 and the melt flow rate values (MFR values) of the copolymers obtained in Examples 1 to 17 were measured. In Examples 4 to 6, 8, and 16, instead of the MFR value, the storage modulus was measured. $M_{sol} \times S/M_{mon}$, where $M_{sol}$ is the amount of substance (mol) of the polymerization solvent A, S is the solubility (mol/mol) of VDF in the polymerization solvent A, and $M_{mon}$ is the amount of substance (mol) of VDF dissolved in the polymerization medium, during the polymerization was calculated. The measurement methods and the calculation methods were as follows. In the table, "-" means that the measurement was impossible.

<Polymerization Rate>

The polymerization rate was calculated according to the following equation.

Polymerization rate (g/h·L) = yield (g) of the obtained copolymer/{polymerization time (h) volume (L) of the polymerization solvent}

The polymerization solvent herein does not include the polymerization initiator.

<MFR Value>

The mass (g) of the copolymer that flowed out in 10 minutes from an orifice with a diameter of 2.095 mm and a length of 8.000 mm under the conditions of a temperature of 230°C and a load of 49.0 N was measured using a thermal flow

evaluation apparatus (product name "FLOW TESTER CFT-100EX" manufactured by SHIMADZU CORPORATION) in accordance with ASTM D3159, to determine the MFR (g/10 min).

<Mooney Viscosity>

The viscosity was measured at a measurement temperature of 100°C using a Mooney viscometer (MV2000E type manufactured by ALPHA TECHNOLOGIES) in accordance with ASTM-D1646 and JIS K6300-1:2013.

<Ratio of Each Monomer>

The ratio of each structural unit in the polymer was determined from $^{19}F$-NMR analysis, fluorine content analysis, or infrared absorption spectrum analysis.

<$M_{sol} \times S/M_{mon}$>

First, as described above, $M_{sol}$, which is the amount of substance (mol) of the polymerization solvent A, S, which is the solubility (mol/mol) of VDF in the polymerization solvent A, and $M_{mon}$, which is the amount of substance (mol) of VDF dissolved in the polymerization medium, were calculated. Thereafter, $M_{sol} \times S/M_{mon}$ was calculated using $M_{sol}$, S, and $M_{mon}$.

In Table 1, the types of the monomer, the polymerization medium, and the polymerization initiator, the polymerization rate, MFR (storage modulus in Example 7), and $M_{sol} \times S/M_{mon}$ are described.

[Table 1]

| | Monomer | Polymerization medium | Polymerization initiator | Polymerization rate [g/ (L·h)] | MFR [g/10 min] | Mooney viscosity (ML 1+ 10·100°C) | Polymerization temperature [°C] | $M_{sol} \times S/ M_{mon}$ |
|---|---|---|---|---|---|---|---|---|
| Example 1 | VDF | $BOC_2O$ | IPP | 0.74 | 6.0 | - | 45 | 0.99 |
| Example 2 | VDF | MePiv | IBPO | 1.6 | 42 | - | 30 | 0.99 |
| Example 3 | VDF | TMS | IBPO | 2.4 | 21 | - | 30 | 0.99 |
| Example 4 | VDF | TMP | IBPO | 4.4 | 14 | - | 30 | 0.99 |
| Example 5 | VDF, HFP | $BOC_2O$ | IPP | 0.37 | - | 32 | 45 | 0.99 |
| Example 6 | VDF, HFP | MePiv | IBPO | 0.63 | - | 46 | 30 | 0.99 |
| Example 7 | VDF, HFP, TFE | TMP | IBPO | 1.9 | - | 71 | 30 | 0.99 |
| Example 8 | VDF, maleic anhydride | MePiv | IBPO | 1.3 | 33 | - | 30 | 0.99 |
| Example 9 | VDF, HFP, maleic anhydride | MePiv | IBPO | 0.41 | - | 31 | 30 | 0.99 |
| Example 10 | VDF | MePiv/MEK = 85/15 | IBPO | 1.0 | - | - | 30 | 0.84 |
| Example 11 | VDF | MePiv/MEK = 70/30 | IBPO | 0.40 | - | - | 30 | 0.69 |
| Example 12 | VDF | MePiv/TMP = 50/50 | IBPO | 2.5 | 26 | - | 30 | 0.99 |
| Example 13 | VDF | TBME | IBPO | - | - | - | 30 | 0.99 |
| Example 14 | VDF, norbomenoi c anhydride | C6H | IBPO | 11 | Unmeasurable | - | 30 | 0.99 |
| Example 15 | VDF, HFP, norbomenoi c anhydride | C6H | IBPO | 15 | Unmeasurable | - | 30 | 0.99 |
| Example 16 | VDF | MePiv/water | IBPO | 0.66 | - | - | 30 | 0.99 |
| Example 17 | VDF, HFP | MePiv/water | IBPO | 0.19 | - | - | 30 | 0.99 |

As shown in Table 1, it was found that in Examples 1 to 12 and Examples 16 and 17, since polymerization was performed using a monomer containing VDF in a polymerization medium containing at least one polymerization solvent A selected from the group consisting of compounds represented by Formula (1) and Formula (2), the polymerization rate was higher than before.

The entire contents of the disclosures by Japanese Patent Application No. 2022-112715 filed on July 13, 2022 are incorporated herein by reference. All the literature, patent application, and technical standards cited herein are also herein incorporated to the same extent as provided for specifically and severally with respect to an individual literature, patent application, and technical standard to the effect that the same should be so incorporated by reference.

## Claims

1. A method for producing a fluorine-containing polymer, the method comprising performing polymerization using a monomer containing vinylidene fluoride in a polymerization medium containing at least one polymerization solvent A selected from the group consisting of compounds represented by the following Formula (1) and Formula (2):

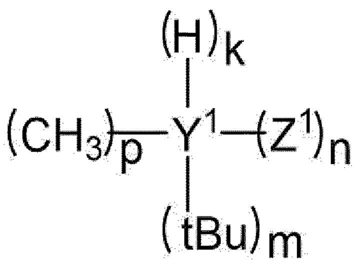

(1)

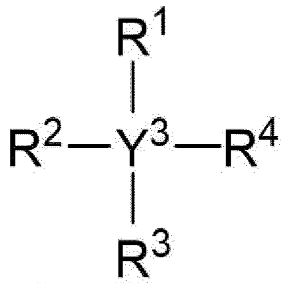

(2)

wherein, in Formula (1), $Y^1$ represents an oxygen atom,
each of p, m, n, and k is independently an integer satisfying p + m = 1 or more and p + m + n + k = 2,
when p is 1 or more, n is 1 or more,
each $Z^1$ is independently a group represented by any one of the following Formulas (T1) to (T14),
in Formula (2), $Y^3$ represents a carbon atom or a silicon atom, and
each of $R^1$ to $R^4$ independently represents a methyl group, a tert-butyl group, or a tert-butoxy group:

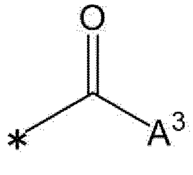

(T1)

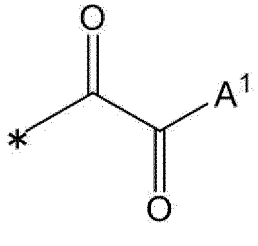

(T2)

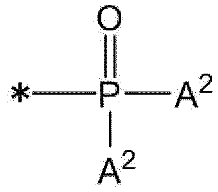

(T3)

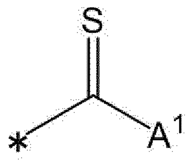

(T4)

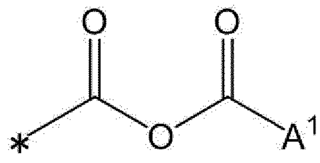

(T5)

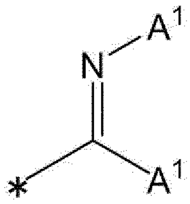

(T6)

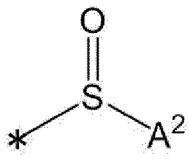

(T7)

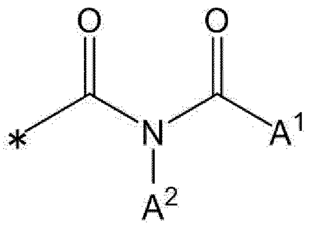

(T8)

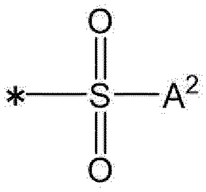

(T9)

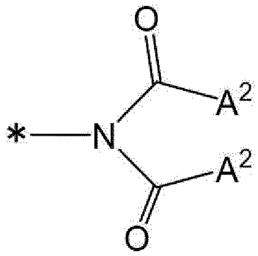

(T10)

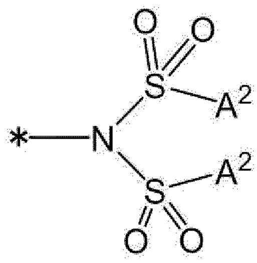

(T11)

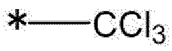

(T12)

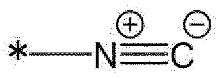

(T13)

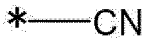

(T14)

wherein, in Formula (T1) to (T14), each $A^1$ independently represents a hydrogen atom, a chlorine atom, a methyl group, a tert-butyl group, -OR, $-NR_2$, or -SR, each $A^2$ independently represents a chlorine atom, a methyl group, a tert-butyl group, -OR, $-NR_2$, or -SR, $A^3$ represents a hydrogen atom, a chlorine atom, a tert-butyl group, a tert-butoxy group, $-NR_2$, or -SR, each R independently represents a methyl group or a tert-butyl group, and * represents a binding site.

**2.** The method for producing a fluorine-containing polymer according to claim 1, wherein:

the monomer further includes a fluorine-containing monomer having a fluorine atom other than the vinylidene fluoride, and
the fluorine-containing monomer includes at least one selected from the group consisting of fluorine-containing monomers represented by the following Formulas (X1), (X2), and (X3):

$CX^1X^2=C(X^3)-(O)_{n1}-Rf^1R^{10}$ ... (X1)

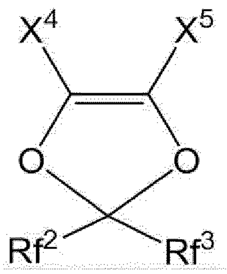

(X2)

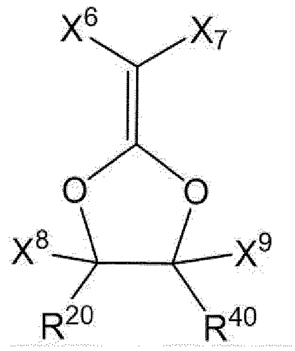

(X3)

wherein, in Formula (X1), each of $X^1$, $X^2$, and $X^3$ independently represents a hydrogen atom or a fluorine atom, $Rf^1$ represents a perfluoroalkylene group having from 1 to 5 carbon atoms, and an etheric oxygen atom may be contained between carbon-carbon bonds of the perfluoroalkylene group,
$R^{10}$ represents a hydrogen atom, a fluorine atom, $-SO_2R^{11}$, $-COR^{11}$, or a cyano group,
each $R^{11}$ independently represents a hydrogen atom, a fluorine atom, a hydroxyl group, or an alkoxy group, and n1 is 0 or 1,
in Formula (X2), each of $X^4$ and $X^5$ independently represents a hydrogen atom or a fluorine atom,
each of $Rf^2$ and $Rf^3$ independently represents a perfluoroalkyl group having from 1 to 5 carbon atoms or a fluorine atom, and an etheric oxygen atom may be contained between carbon-carbon bonds of the perfluoroalkyl group, and
in Formula (X3), each of $X^6$, $X^8$, and $X^9$ independently represents a hydrogen atom or a fluorine atom,
each $X^7$ independently represents a hydrogen atom, a fluorine atom, or a trifluoromethyl group,
each $R^{20}$ independently represents a fluorine atom or $-Rf^4-R^{30}$,
each $R^{40}$ independently represents a fluorine atom or $-Rf^5-R^{50}$,
each of $Rf^4$ and $Rf^5$ independently represents a perfluoroalkylene group having from 1 to 5 carbon atoms, and an etheric oxygen atom may be contained between carbon-carbon bonds of the perfluoroalkylene group, and
each of $R^{30}$ and $R^{50}$ independently represents $-SO_2R^{11}$, $-COR^{11}$, or a cyano group.

3. The method for producing a fluorine-containing polymer according to claim 1 or 2, wherein the monomer further includes at least one fluorine-containing monomer selected from the group consisting of hexafluoropropylene and tetrafluoroethylene.

4. The method for producing a fluorine-containing copolymer according to claim 1 or 2, wherein the monomer further includes a non-fluorinated monomer having no fluorine atom and having an ethylenically unsaturated group.

5. The method for producing a fluorine-containing copolymer according to claim 1 or 2, wherein the monomer further includes a non-fluorinated monomer having no fluorine atom, having an ethylenically unsaturated group, and having at least one reactive group selected from the group consisting of a reactive silyl group, an amino group, an isocyanato group, a hydroxyl group, an epoxy group, an acid anhydride residue, an alkoxycarbonyl group, a carboxy group, and a carboxylic acyl group.

6. The method for producing a fluorine-containing copolymer according to claim 1 or 2, wherein the monomer further includes a non-fluorinated monomer having no fluorine atom, having an ethylenically unsaturated group, and having at least one reactive group selected from the group consisting of a hydroxyl group, an acid anhydride residue, an alkoxylcarbonyl group, a carboxy group, and a carboxylic acyl group.

7. The method for producing a fluorine-containing copolymer according to claim 1 or 2, wherein:

a proportion of water in the polymerization medium is less than 10 vol%, and
solution polymerization is performed using the monomer in the polymerization medium.

8. The method for producing a fluorine-containing polymer according to claim 1 or 2, wherein suspension polymerization is performed using the monomer in a polymerization medium containing the at least one polymerization solvent A selected from the group consisting of compounds represented by Formula (1) and Formula (2) and being incompatible with water, and water,

a proportion of water in the polymerization medium is from 10 vol% to 80 vol%,
in Formula (1), $Y^1$ represents an oxygen atom,
k is 0, each of p, m, n, and k is independently an integer satisfying p + m = 1 or more and p + m + n = 2, when p is 1 or more, n is 1 or more,
each $Z^1$ is independently a group represented by any one of Formulas (T1) to (T3), Formula (T7), Formula (T8), or Formula (T10),
in Formula (2), $Y^3$ represents a carbon atom or a silicon atom,
each of $R^1$ to $R^4$ independently represents a methyl group, a tert-butyl group, or a tert-butoxy group, and
in Formulas (T1) to (T3), (T7), (T8), and (T10), each $A^1$ independently represents a hydrogen atom, a methyl group, a tert-butyl group, -OR, or $-NR_2$, each $A^2$ independently represents a methyl group, a tert-butyl group, -OR, or $-NR_2$, $A^3$ represents a hydrogen atom, a tert-butyl group, a tert-butoxy group, or $-NR_2$, each R independently represents a methyl group or a tert-butyl group, and * represents a binding site.

**9.** The method for producing a fluorine-containing copolymer according to claim 1 or 2, wherein, in Formula (1), each $Z^1$ is independently a group represented by any one of Formulas (T1) to (T3).

**10.** The method for producing a fluorine-containing copolymer according to claim 1 or 2, wherein, in Formula (1), each $Z^1$ is independently a group represented by Formula (T1).

**11.** The method for producing a fluorine-containing copolymer according to claim 1 or 2, wherein, in Formula (2), $Y^3$ represents a carbon atom.

## INTERNATIONAL SEARCH REPORT

International application No.
**PCT/JP2023/025196**

**A. CLASSIFICATION OF SUBJECT MATTER**

***C08F 14/22***(2006.01)i; ***C08F 2/06***(2006.01)i
FI: C08F14/22; C08F2/06

According to International Patent Classification (IPC) or to both national classification and IPC

**B. FIELDS SEARCHED**

Minimum documentation searched (classification system followed by classification symbols)

C08F14/22; C08F2/06

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 48-006628 B1 (E.I. DU PONT DE NEMOURS AND COMPANY) 27 February 1973 (1973-02-27)<br>claim 1, p. 3, left column, lines 9-12, p. 6, left column, line 23 to p. 15, left column, line 21, examples 1, 3, 6, 7, 9, 10, 11, 16, 17, 19, 21, 26 | 1, 3-7, 9-11 |
| A | | 2, 8 |
| X | JP 2001-302732 A (KANTO DENKA KOGYO CO LTD) 31 October 2001 (2001-10-31)<br>claims 1, 4, paragraphs [0009]-[0010], [0029], [0042]-[0070], examples 3, 5 | 1-7, 9-11 |
| A | | 8 |
| A | JP 2020-184521 A (TIANJING UNIV) 12 November 2020 (2020-11-12)<br>paragraph [0044] | 1-11 |
| A | JP 50-094093 A (KUREHA CHEMICAL INDUSTRIES CO., LTD.) 26 July 1975 (1975-07-26)<br>control example 4 | 1-11 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **15 September 2023** | **03 October 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2023/025196**

| Patent document cited in search report | Publication date (day/month/year) | Patent family member(s) | Publication date (day/month/year) |
|---|---|---|---|
| JP 48-006628 B1 | 27 February 1973 | (Family: none) | |
| JP 2001-302732 A | 31 October 2001 | (Family: none) | |
| JP 2020-184521 A | 12 November 2020 | US 2020/0343569 A1<br>paragraph [0078]<br>CN 110128686 A<br>KR 10-2020-0126905 A | |
| JP 50-094093 A | 26 July 1975 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20150057419 A
- WO 2015047749 A1
- JP 2022112715 A